# EUROPEAN PATENT APPLICATION

(11) **EP 3 779 798 A1**
(43) Date of publication of application: **17.02.2021**
(21) Application number: 19774442.8
(22) Date of filing: 22.01.2019
(51) Int. Cl.: G06N 3/02, G06F 8/34

(54) **INFORMATION PROCESSING METHOD, INFORMATION PROCESSING DEVICE, AND PROGRAM**

(30) Priority: 28.03.2018 JP 2018061790
(71) Applicant: Sony Corporation, 108-0075 Tokyo (JP)
(72) Inventor: KOBAYASHI, Yoshiyuki, Tokyo 108-0075 (JP)
(74) Representative: 2SPL Patentanwälte PartG mbB
(86) International application number: PCT/JP2019/001871
(87) International publication number: WO 2019/187542

(57) **Abstract**

[Problem]

To enable an increase in efficiency of developing a neural network.

[Solution]

An information processing method including, by a processor, providing a form for creating a program to build a neural network based on arrangement of a component corresponding to a layer and properties that are set in the component; and representing statistical information on the neural network, wherein the providing a form further includes providing a function of, on the form, defining a unit formed of the multiple components, and providing the defined unit such that the defined unit can be arranged like the component, is provided.

## Description

### Field

The disclosure relates to an information processing method, an information processing apparatus, and a program.

### Background

In recent years, various functions utilizing neural networks have been developed. Various methods for increasing efficiency in developing neural networks have been proposed. For example, Patent Literature 1 discloses a technique of visual programming to generate a neural network based on arrangement of components corresponding to layers.

### Citation List

### Patent Literature

Patent Literature 1: International Publication Pamphlet No. WO2017/138220

### Summary

### Technical Problem

In the technique described in Patent Literature 1, however, a component that can be arranged on a form corresponds uniquely to a single layer. For this reason, in the technique described in Patent Literature 1, even when a predetermined layering that is formed of multiple layers is repeated for multiple times, it is required to form the layering using components corresponding to the respective layers as needed.

The disclosure thus provides an information processing method, an information processing apparatus, and a program that are new and improved and that make it possible to increase efficiency in developing a neural network.

### Solution to Problem

According to the present disclosure, an information processing method is provided that includes: by a processor, providing a form for creating a program to build a neural network based on arrangement of a component corresponding to a layer and properties that are set in the component; and representing statistical information on the neural network, wherein the providing a form further includes providing a function of, on the form, defining a unit formed of the multiple components, and providing the defined unit such that the defined unit can be arranged like the component.

Moreover, according to the present disclosure, an information processing apparatus is provided that includes: a form controller configured to provide a form for creating a program to build a neural network based on arrangement of a component corresponding to a layer and properties that are set in the component and represent statistical information on the neural network on the form, wherein the form controller is configured to provide a function of, on the form, defining a unit formed of the multiple components and provide the defined unit such that the defined unit can be arranged like the component.

Moreover, according to the present disclosure, a program is provided that causes a computer to function as an information processing apparatus including: a form controller configured to provide a form for creating a program to build a neural network based on arrangement of a component corresponding to a layer and properties that are set in the component and represent statistical information on the neural network on the form, wherein the form controller is configured to provide a function of, on the form, defining a unit formed of the multiple components and provide the defined unit such that the defined unit can be arranged like the component.

### Advantageous Effects of Invention

According to the disclosure described above, it is possible to increase efficiency in developing a neural network.

The above-described effect is not restrictive and, together with the above-described effect or instead of the above-described effect, any one of the effects represented in the description or another effect that can be known from the description may be achieved.

### Brief Description of Drawings

FIG. 1 is a block diagram illustrating an example of a configuration of an information processing system according to an embodiment of the disclosure.
FIG. 2 is a block diagram illustrating an example of a functional configuration of an information processing terminal according to the embodiment.
FIG. 3 is a block diagram illustrating an example of a functional configuration of an information processing server according to the embodiment.
FIG. 4 is a diagram illustrating an example of displaying a form according to the embodiment.
FIG. 5 is a diagram for describing a definition of a unit according to the embodiment.
FIG. 6 is a diagram for describing setting an argument in a unit according to the embodiment.
FIG. 7 is a diagram for describing arranging a unit and setting an argument according to the embodiment.
FIG. 8 is a diagram for describing defining a unit including at least one unit according to the embodiment.
FIG. 9 is a diagram for describing a learning network and an evaluating network using a unit according to the embodiment.
FIG. 10 is a flowchart illustrating a flow of reflecting a parameter that is changed in a unit according to the embodiment.
FIG. 11 is a diagram illustrating an example of displaying statistical information on a whole neural network according to the embodiment.
FIG. 12 is a diagram illustrating an example of displaying statistical information on each unit according to the embodiment.
FIG. 13 is a flowchart illustrating a flow of calculating statistical information according to the embodiment.
FIG. 14 is an example of a source code that is output by a generator according to the embodiment.
FIG. 15 is a flowchart illustrating a flow of outputting a source code by the generator according to the embodiment.
FIG. 16 is a diagram for describing automatic structure search performed by the generator according to the embodiment.
FIG. 17 is a diagram for describing structure search permissibility setting in an argument component according to the embodiment.
FIG. 18 is a diagram for describing structure search permissibility setting in a unit according to the embodiment.
FIG. 19 is a flowchart illustrating a flow of automatic structure search performed by the generator according to the embodiment.
FIG. 20 is a diagram illustrating an example of a hardware configuration of an information processing server according to the embodiment of the disclosure.

### Description of Embodiments

With reference to the accompanying drawings, preferable embodiments of the disclosure will be described in detail below. In the description and drawings, components that have substantially the same functional configurations are denoted with the same numbers and redundant description is thus omitted.

Description will be given in the following order.
1. Embodiments
   1.1. Overview
   1.2. Example of System Configuration
   1.3. Functional Configuration of Information Processing Terminal Device 10
   1.4. Functional Configuration of Information Processing Server 20
   1.5. Details of Form Control
   1.6. Outputting Source Code
   1.7. Automatically Searching for Network structure
2. Hardware Configuration
3. Summary

### 1. Embodiment

### 1.1. Overview

First of all, an overview of an embodiment of the disclosure will be described. As described above, in recent years, various methods for increasing efficiency in developing neural networks have been proposed. The above-described methods include, for example, a visual programming method like that disclosed in Patent Literature 1.

The visual programming herein refers to a method of creating a program code using visual objects without writing a program code by texts in software development. Visual programming makes it possible to create a program, for example, by operating objects on a GUI (Graphical User Interface).

For example, in the case of the technique described in Patent Literature 1, a user is able to develop a neural network without writing a program code by arranging components corresponding to layers that form a neural network on a form and setting connection between the layers and various properties.

According to the technique described in Patent Literature 1, even a user whose programming skill is insufficient is able to easily create a neural network and it is possible to significantly increase efficiency in developing a neural network.

As described, however, in the technique described in Patent Literature 1, a component that can be arranged on a form uniquely corresponds to a single layer and thus, when a predetermined layering is repeated for multiple times, it is required to arrange the layering as needed.

For example, when a layering in which "convolution", "MaxPooling", "Tanh" are connected in this order exists for multiple times, in the technique described in Patent Literature 1, it is necessary to arrange the components corresponding to the respective layers as needed and set properties, etc.

In general, however, a predetermined layering like that described above is often used repeatedly and not a few layerings that are used repeatedly include few tens of layers or more. For this reason, writing a layering that is used repeatedly using components each corresponding to a single layer as needed may be a cause of lowering efficiency in developing a neural network.

The technical idea according to the embodiment of the disclosure was formed with the above-described aspect being focused on and the technical idea makes it possible to increase the developing efficiency in neural network visual programming. For this reason, an information processing method according to the embodiment of the disclosure has a characteristic in including, by a processor, providing a form for creating a program to build a neural network based on arrangement of a component corresponding to a layer and properties that are set in the component; and representing statistical information on the neural network. The providing a form has a characteristic in further including, on the form, providing a function of defining a unit formed of multiple components and providing the defined unit such that the defined unit can be arranged like a component.

In other words, according to the information processing method according to the embodiment of the disclosure, in neural network visual programming, it is possible to define a predetermined layering formed of multiple layers as a unit that is formed of corresponding multiple components. According to the information processing method according to the embodiment of the disclosure, enabling the unit to be arranged like a component allows the user to easily use the predetermined layering without forming the predetermined layering using the components as needed.

The overview of the embodiment of the disclosure has been described. As described above, according to the information processing method according to the embodiment of the disclosure, defining a unit corresponding to multiple layers and realizing a visual programming using the unit make it possible to significantly increase efficiency in developing a neural network.

### 1.2. Example of System Configuration

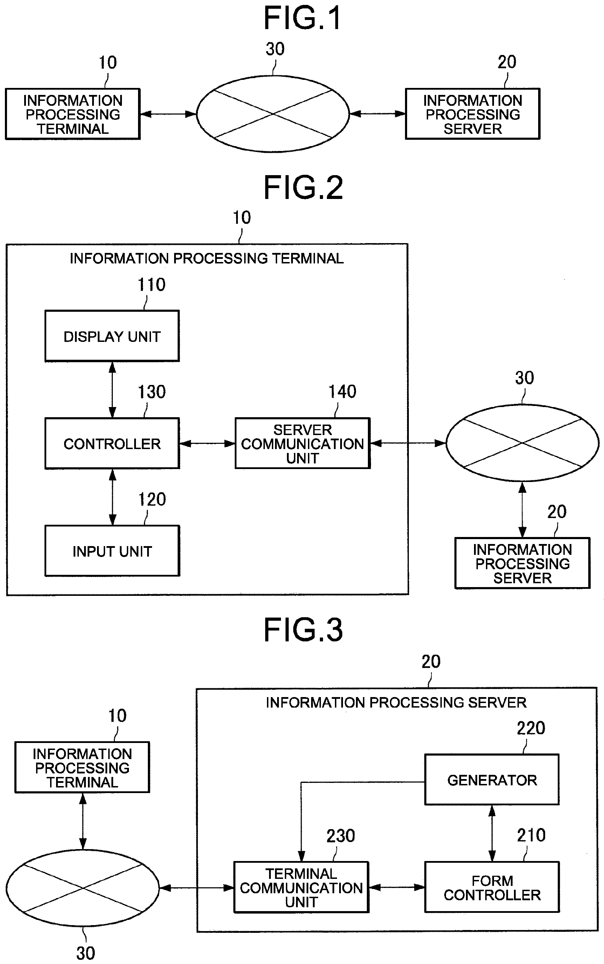

An example of a configuration of an information processing system according to an embodiment of the disclosure will be described. FIG. 1 is a block diagram illustrating the example of the configuration of the information processing system according to the embodiment. Referring to FIG. 1, the information processing system according to the embodiment includes an information processing terminal device 10 and an information processing server 20. The information processing terminal device 10 and the information processing server 20 are connected to each other via a network 30 such that the information processing terminal device 10 and the information processing server 20 can communicate with each other.

### Information Processing Terminal Device 10

The information processing terminal device 10 according to the embodiment is a client terminal device for performing neural network visual programming. Based on the control of the information processing server 20, the information processing terminal device 10 according to the embodiment displays a form for performing visual programming and transmits information on input operations on the form performed by a user to the information processing server 20. The information processing terminal device 10 according to the embodiment may be, for example, a personal computer (PC), or the like. As described below, the information processing terminal device 10 according to the embodiment may function as an information processing apparatus having a function equivalent to that of the information processing server 20.

### Information Processing Server 20

The information processing server 20 according to the embodiment is an information processing apparatus that implements the information processing method according to the embodiment. The information processing server 20 according to the embodiment has a function of controlling a form of neural network visual programming and generating a neural network based on arrangement of components and units in the form.

### Network 30

The network 30 has a function of connecting the information processing terminal device 10 and the information processing server 20 to each other. The network 30 may include public networks, such as the Internet, a telephone network and a satellite communication network, various types of LAN (Local Area Network) including Ethernet (trademark), and a WAN (Wide Area Network). The network 30 may include a dedicated network, such as IP-VPN (Internet Protocol-Virtual Private Network). The network 30 may include a radio communication network, such as one according to Wi-Fi (trademark) or Bluetooth (Trademark).

The example of the configuration of the information processing system according to the embodiment of the disclosure has been described. Note that the configuration described above using FIG. 1 is an example only and the configuration of the information processing system according to the embodiment is not limited to the example. The configuration of the information processing system according to the embodiment can be modified flexibly according to the specification and operation.

### 1.3. Functional Configuration of Information Processing Terminal Device 10

An example of the functional configuration of the information processing terminal device 10 according to the embodiment of the disclosure will be described. FIG. 2 is a block diagram illustrating the example of the functional configuration of the information processing terminal device 10 according to the embodiment. Referring to FIG. 2, the information processing terminal device 10 according to the embodiment includes a display unit 110, an input unit 120, a controller 130 and a server communication unit 140.

### Display Unit 110

The display unit 110 according to the embodiment has a function of outputting visual information, such as an image or texts. Based on the control of the information processing server 20, the display unit 110 according to the embodiment displays a form of neural network visual programming.

For this reason, the display unit 110 according to the embodiment includes a display device that represents visual information. As the above-described display device, for example, a liquid crystal display (LCD: Liquid Crystal Display) device, an OLED (Organic Light Emitting Diode) device, or a touch panel is taken. The display unit 110 according to the embodiment may output visual information using a projection function.

### Input Unit 120

The input unit 120 according to the embodiment has a function of detecting an input operation performed by the user. The input unit 120 according to the embodiment detects an operation of arranging a component or a unit on a form. The input unit 120 according to the embodiment thus includes a keyboard, a touch panel, a mouse and various buttons.

### Controller 130

The controller 130 according to the embodiment has a function of controlling each component of the information processing terminal device 10. The controller 130, for example, controls starting or stopping each component. The controller 130 inputs a control signal that is generated by the information processing server 20 to the display unit 110. The controller 130 according to the embodiment may have a function equivalent to that of the form controller 210 of the information processing server 20 to be described below.

### Server Communication unit 140

The server communication unit 140 according to the embodiment has a function of performing information communication with the information processing server 20 via the network 30. Specifically, the server communication unit 140 receives a control signal of form control from the information processing server 20. The server communication unit 140 transits information on an input operation that is performed by the user and that is detected by the input unit 120 to the information processing server 20.

The example of the functional configuration of the information processing terminal device 10 according to the embodiment of the disclosure has been described. The above-described configuration described using FIG. 2 is an example only and the functional configuration of the information processing terminal device 10 according to the embodiment is not limited to the example. For example, as described above, the controller 130 according to the embodiment may have a function equivalent to that of the form controller 210 of the information processing server 20. The functional configuration of the information processing terminal device 10 according to the embodiment can be flexibly modified according to the specification and operation.

### 1.4. Functional Configuration of Information Processing Server 20

A functional configuration of the information processing server 20 according to the embodiment of the disclosure will be described. FIG. 3 is a block diagram illustrating an example of a functional configuration of the information processing server 20 according to the embodiment. Referring to FIG. 3, the information processing server 20 according to the embodiment incudes a form controller 210, a generator 220, and a terminal communication unit 230.

### Form Controller 210

The form controller 210 according to the embodiment performs control on a form that realizes neural network visual programming. More specifically, the form controller 210 according to the embodiment has a function of providing a form for creating a program to build a neural network based on arrangement of a component corresponding to a layer and properties that are set in the component and representing statistical information on the neural network on the form.

The form controller 210 has a characteristic in providing a function of, on the form, defining a unit formed of multiple components and providing the defined unit such that the defined unit can be arranged like a component.

The form controller 210 according to the embodiment may provide the unit such that multiple units are usable and are reusable. In other words, the form controller 210 according to the embodiment may perform control such that the user can freely use the unit that is defined by the user as one type of component.

According to the above-described function of the form controller 210 according to the embodiment, enabling the unit corresponding to the multiple layers to be arranged like a component allows the user to easily use the predetermined layering without forming the predetermined layering using the components as needed. Details of the function of the form controller 210 according to the embodiment will be described separately below.

### Generator 220

The generator 220 according to the embodiment has a function of generating a source code to build a neural network based on arrangement of components and units in the form that is controlled by the form controller 210 and properties that are set. Details of the function of the generator 220 according to the embodiment will be described separately below.

### Terminal Communication Unit 230

The terminal communication unit 230 according to the embodiment performs information communication with the information processing terminal device 10 via the network 30. Specifically, the terminal communication unit 230 transmits a control signal that is generated by the form controller 210 to the information processing terminal device 10. The terminal communication unit 230 receives information relating to an input operation performed by the user on the form from the information processing terminal device 10.

The example of the functional configuration of the information processing server 20 according to the embodiment of the disclosure has been described. Note that the above-described configuration described using FIG. 3 is an example only and the functional configuration of the information processing server 20 according to the embodiment is not limited to the example. For example, the configuration represented in the above description may be dispersedly realized by multiple devices. As described above, the function of the form controller 210 may be implemented as a function of the controller 130 of the information processing terminal device 10. he functional configuration of the information processing server 20 according to the embodiment can be flexibly modified according to the specification and operation.

### 1.5. Details of Form Control

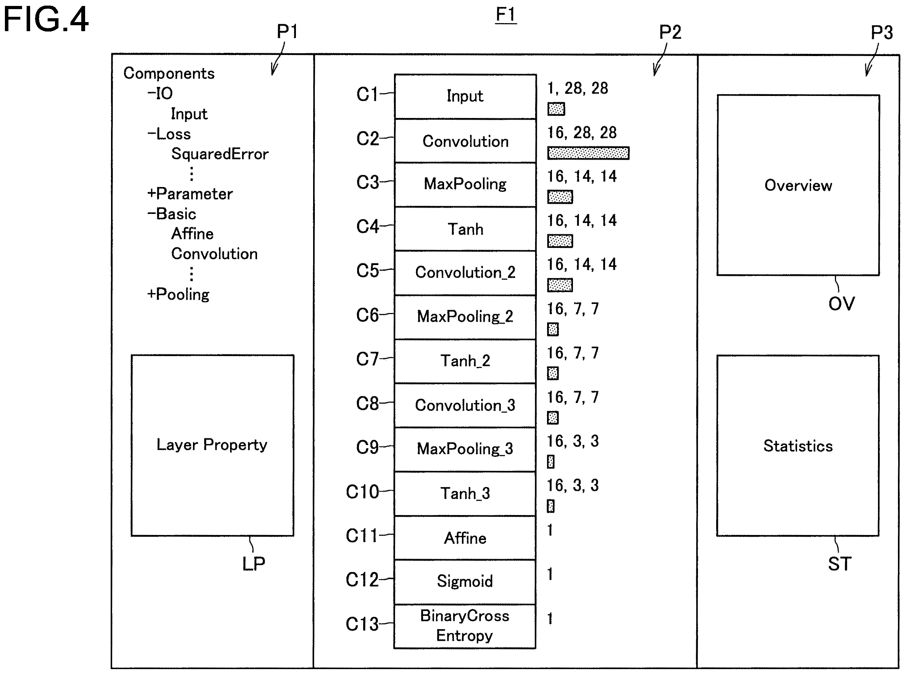

Form Control performed by the form controller 210 according to the embodiment will be described in detail next. FIG. 4 is a diagram illustrating an example of displaying a form according to the embodiment. As illustrated in FIG. 4, a form F1 according to the embodiment includes, for example, pallets P1 to P3.

The palette P1 may be an area for displaying a list of components corresponding to layers. In the palette P1, as illustrated in FIG. 4, components may be displayed according to the classification. By clicking a classification name, control may be performed such that a list of layers of each class is displayed. In the palette P1, property information LP on a neural network and each component is displayed.

The palette P2 is an area for building a neural network by arranging components. The user is able to visually build a neural network by moving, adding or deleting each component. In the case of the example illustrated in FIG. 4, on the palette P2, a network structure formed of components C1 to C13 is represented visually. For example, the user is able add a freely-selected component to the palette P2 by dragging a component that is displayed on the palette P1 and dropping the component.

The palette P3 is an area for displaying various types of information on the neural network being built. On the palette P3, for example, an overview OV representing the whole image of the network structure and statistical information ST on the neural network may be displayed.

The statistical information ST according to the embodiment, for example, contains information, such as an output neuron size, an amount of memory used by a parameter, and amounts of various types of computation. The form controller 210 according to the embodiment may have a function of representing, for each component or unit, a value of an element that is selected by the user from among the elements contained in the statistical information ST like the aforementioned elements by comparison. At that time, the form controller 210 according to the embodiment may represent a value for each component or unit and an indicator representing the magnitude of the value of the element in association with a visual representation corresponding to the component or the unit that is arranged on the palette P2.

In the case of the example illustrated in FIG. 4, based on the selection of output neuro size by the user, the form controller 210 displays a value of output neuron size and an indicator corresponding to the value for each component. The above-described function of the form controller 210 according to the embodiment allows the user to intuitively perceive the output neuron size and the amount of computation of each component and take the output neuron size and the amount of computation as a reference when changing the network structure.

The example of displaying a form according to the embodiment has been described. Defining a unit according to the embodiment will be described. As described above, the form controller 210 according to the embodiment has a characteristic in providing a function of defining a unit formed of multiple components.

For example, in the example illustrated in FIG. 4, in the network structure, a configuration formed in the order of "Convolution", "MaxPooling", "Tanh" is repeated for three times (corresponding to Components C2 to C4, C5 to C7 and C8 to C10).

At that time, in the information processing method according to the embodiment, defining the above-described configuration as a unit makes it possible to significantly reduce the work of input by the user for building and the work of operation by the user for editing.

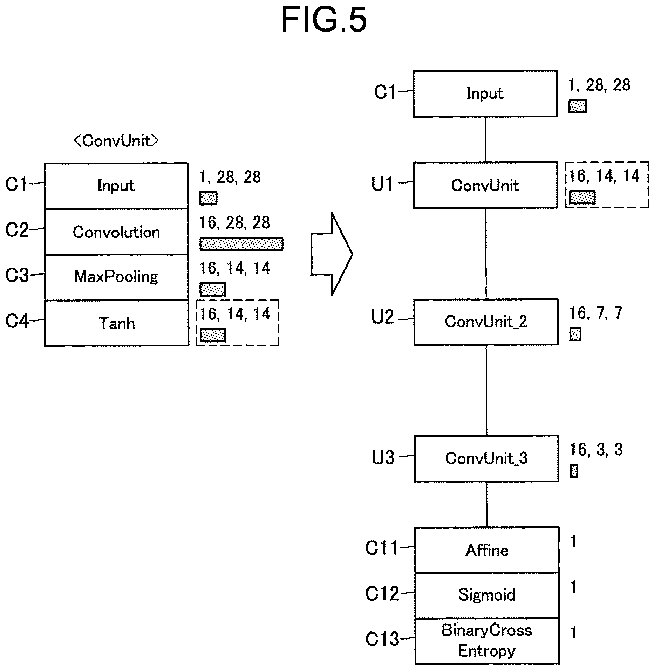

FIG. 5 is a diagram for explaining defining a unit according to the embodiment. On the left in FIG. 5, an example of a unit that is defined by the user is illustrated. In the example illustrated in FIG. 5, the user defines a unit "ConvUnit" formed of four components C1 to C4 of "Input", "Convolution", "Maxpooling" and "Tanh". The user may execute defining a unit, for example, on the palette P2.

The user arranges the unit that is defined as described above on the palette P2 like other components, thereby incorporating the unit into the network structure. In the example illustrated on the right in FIG. 5, the user replaces "Convolution", "Maxpooling", and "Tanh" contained in the network structure illustrated in FIG. 4 with the units U1 to U3 corresponding to "ConvUnit" defined above.

As described above, according to the function of defining a unit according to the embodiment, it is possible to express a layering that appears repeatedly by a corresponding single unit and exclude the work of arranging multiple components as needed.

The form controller 210 according to the embodiment may display the defined unit on the palette P2, using a predetermined visual representation not depending on the type and the number of components forming the unit. In other words, the form controller 210 may display the defined unit in a size or in a form the same as or similar to that of another component corresponding to a single layer. According to the display control, an effect that not unnecessarily reducing the space in the palette P2 and realizing a simplified display allow the user to easily know the entire configuration of the network is expected.

Setting an argument that is used by a unit according to the embodiment will be described. It has been described that a predetermined layering is defined as a unit and using the unit makes it easy to write a layering that is used repeatedly.

On the other hand, the case where, even when the layering is the same, different processing is to be executed in each unit is assumed. For this reason, the form controller 210 according to the embodiment may provide a function of defining an argument that is commonly usable among multiple components forming a unit and perform control such that the defined argument can be set as part of the properties of the unit.

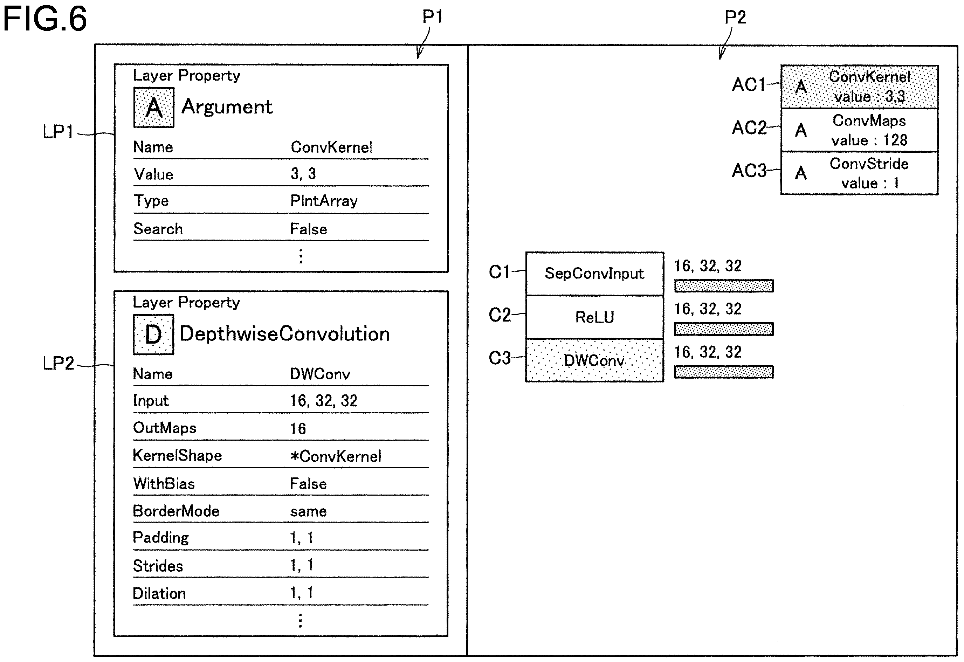

FIG. 6 is a diagram for describing setting an argument in a unit according to the embodiment. FIG. 6 illustrates an example of a display made when the user defines a unit on a form. In the example illustrated in FIG. 6, the user defines a unit formed of components C1 to C3 corresponding to "SepConvInput", "ReLU" and "DWConv" on the palette P2.

The form controller 210 according to the embodiment, for example, may arrange an argument component for setting an argument on the palette P2 and perform control such that an argument can be set by inputting various types of information on the palette P1.

For example, in the case illustrated in FIG. 6, the user arranges argument components AC1 to AC3 corresponding to "ConvKarnel", "ConvMaps", and "ConvStride". The argument component AC1 corresponding to "ConvKarnel" may be an argument component for setting a kernel shape of the component C3 corresponding to "DWConv".

At that time, the user is able to set a name and a default value of the argument component AC1 in the property information LP1 on the argument component AC1 that is displayed on the palette P1.

By selecting the component C3 corresponding to "DWConv" and inputting the name "ConvKarnel" of the argument component AC1 that is set as described above to "KarnelShape" in the property information LP2 on the component C3, the user is able to make a setting such that the component C3 refers to, for setting a kernel shape, the argument that is set as described above.

By making similar inputs for the argument components AC1 to AC3 corresponding to "ConvMaps" and "ConvStride", it is possible to make a setting such that the component C3 refers to the corresponding argument. The argument components AC1 and AC3 may be argument components for setting an output neuron size and a stride value of the component C3.

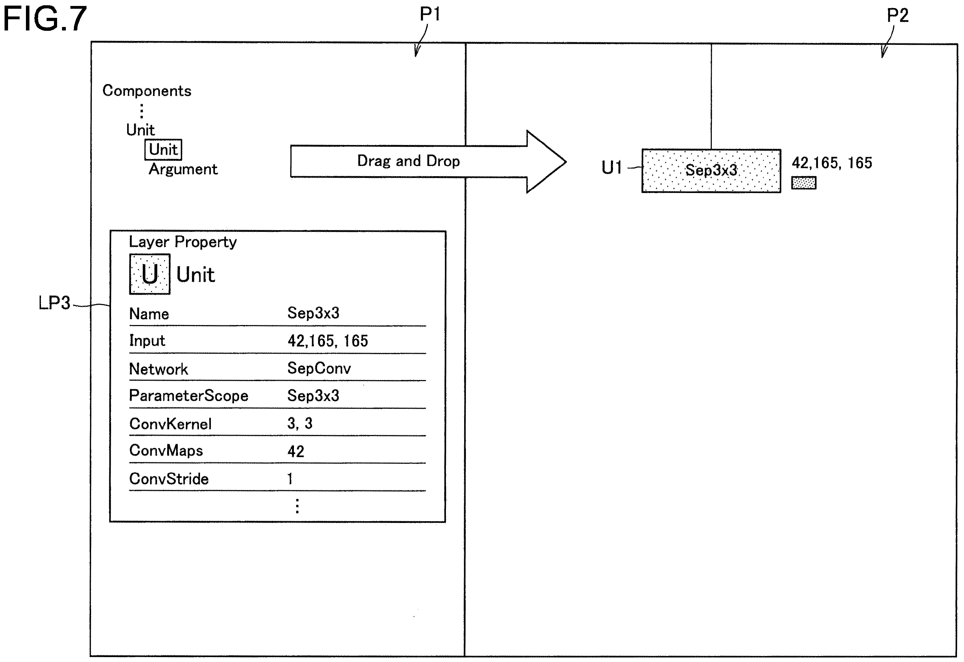

FIG. 7 is a diagram for describing arranging a unit and setting an argument according to the embodiment. As illustrated in FIG. 7, the form controller 210 according to the embodiment may display a unit that is defined by the user such that the unit is selectable like a component on the palette P1. The user is able to arrange a freely-selected unit by dragging the unit that is displayed on the palette P1 and dropping the unit into the palette P2 and specifying a name of the defined unit as "Network" that is displayed as an item in the property information LP3 on the unit. "Name" in the property information LP3 may be an item that is used as a display name and an identifier of the unit.

Based on the unit name that is input to "Network", the form controller 210 according to the embodiment causes the argument that is set in a corresponding unit as part of the property information such that the argument is editable. In the example illustrated in FIG. 7, based on "SepConv" that is input by the user, the form controller 210 adds the arguments "ConvKarnerl", "ConvMaps" and "ConvStride" as items of the property information LP3. Inputting a freely-selected value to an argument like the aforementioned one enables the arranged unit to execute a desired process.

Defining a unit and setting an argument according to the embodiment have been described. According to the information processing method according to the embodiment, defining a layering that is frequently used as a unit and using the unit make it easy to create and edit a network configuration and make it possible to make a display such that the whole network structure can be known intuitively.

The unit according to the embodiment may be definable in a nested manner. In other words, the form controller 210 according to the embodiment may allow a unit to be formed by including at least one unit.

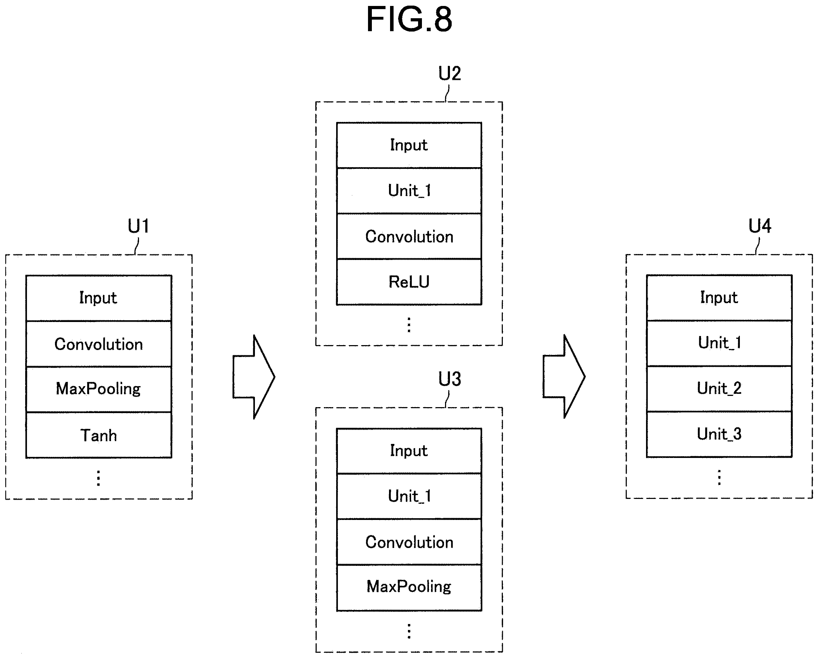

FIG. 8 is a diagram for describing defining a unit including at least one unit according to the embodiment. For example, as illustrated on the left in FIG. 8, first of all, the user defines a unit U1 that contains no unit and that is formed of multiple components.

Next, as illustrated at the center in FIG. 8, the user is able to define a unit U2 and a unit U3 each containing the defined unit U1 and other multiple components.

Furthermore, as illustrated on the right in FIG. 8, the user is able to define a unit U4 formed by including multiple units, such as the defined units U1 to U3.

According to defining a unit according to the embodiment, it is possible to create a nested unit. According to the aforementioned unit structure, it is possible to display the huge and complicated network structure simply and make creating and editing operations significantly efficient.

Furthermore, according to defining a unit according to the embodiment, it is possible to make learning and evaluation operations of a neural network efficient. Conventionally, in the case where different network structures are used between learning and evaluating, even when both the network structure are approximately the same, it is necessary to create the network structures separately.

On the other hand, according to defining a unit according to the embodiment, previously defining a structure that is common between networks that are used for learning and evaluating as a unit makes it possible to significantly increase efficiency in creating a learning network and an evaluating network.

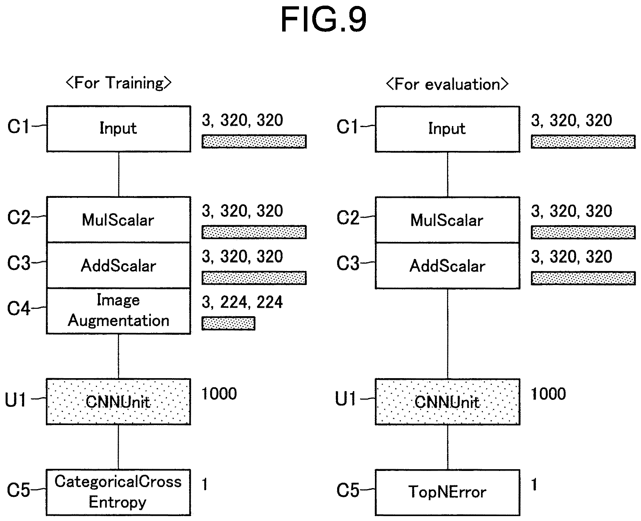

FIG. 9 is a diagram for describing a learning network and an evaluating network using a unit according to the embodiment. In the example illustrated in FIG. 9, the learning network and the evaluating network are formed by including a unit U1 corresponding to "CNNUnit" that is a common process and only arrangement of components before and after the unit U1 differs between the learning network and the evaluating network.

Specifically, in the learning network, a component C4 corresponding to "ImageAugmentation" is arranged on the upstream of the unit U1. While a component C5 corresponding to "CategoricalCrossEntropy" is used for outputting, in the learning network, a component C5 corresponding to "TopNError" is used for outputting in the evaluating network.

As described above, according to the information processing method according to the embodiment, defining a layering that is common between the learning network and the evaluating network as a unit makes it possible to make learning and evaluation operations of a neural network efficient.

With reference to FIG. 5 again, reflecting a parameter that is changed in a unit according to the embodiment will be described. The form controller 210 according to the embodiment is able to display a parameter that is changed according to process of multiple components that form a unit in association with a visual representation corresponding to the unit. For example, in the case of the example illustrated in FIG. 5, the form controller 210 causes an output neuron size that changes according to the processing in "ConvUnit" in association with a visual representation that is the caller of "ConvUnit", that is, the unit U1 on the right in FIG. 5.

According to the above-described function of the form controller 210 according to the embodiment, it is possible to know how various parameters are changed according to processing in the unit clearly and intuitively on the network structure that is the caller of the unit. The above-described display can be referred to as significantly effective representation of information in designing a neural network for which, not as in normal programming, it is necessary to be conscious of the output neuron size, the amount of memory, and the amount of computations.

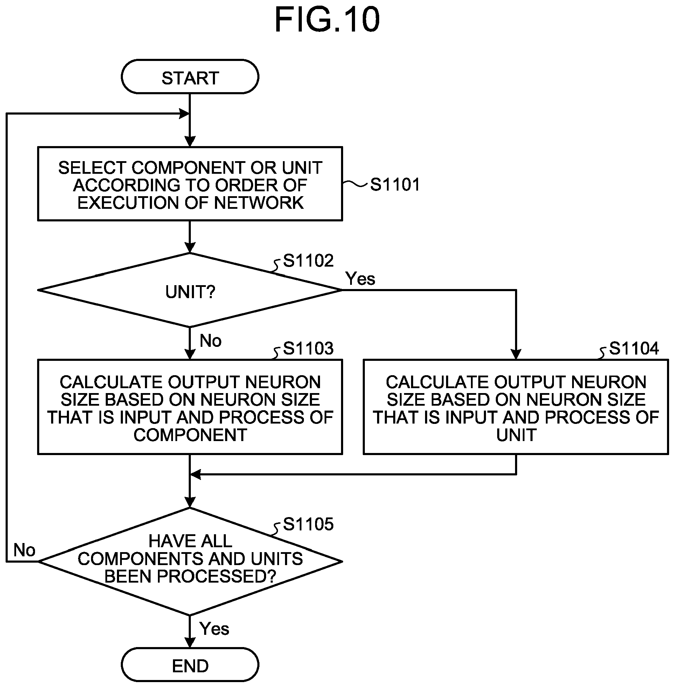

A flow of reflecting a parameter that is changed in a unit according to the embodiment will be described in detail. FIG. 10 is a flowchart illustrating a flow of reflecting a parameter that is changed in a unit according to the embodiment. FIG. 10 represents a flow of changing an output neuron size as an example.

Referring to FIG. 10, first of all, the form controller 210 selects a component or a unit according to an order of execution of a network (S1101).

Subsequently, the form controller 210 determines whether the selected element is a unit (S1102).

When the selected element is a component (S1102: No), the form controller 210 calculates an output neuron size based on a neuron size that is input and a process of the selected component (S1103).

On the other hand, when the selected element is a unit (S1102: Yes), the form controller 210 calculates an output neuron size based on a neuron size that is input and a process of the selected unit (S1104). At that time, the form controller 210 recursively executes the output neuron size calculating process represented in FIG. 10.

When the calculation process at step S1103 or S1104 completes, the form controller 210 according to the embodiment determines whether all components and units have been processed (S1105).

When not all components and units have been processed (S1105: No), the form controller 210 returns to step S1101 and repeats the process at and after step S1101.

On the other hand, when all components and units have been processed (S1105: Yes), the form controller 210 ends the process of calculating an output neuron size.

Subsequently, representing statistical information according to the embodiment will be described in detail. As described above, the form controller 210 according to the embodiment has a function of dynamically representing statistical information on a neural network that is formed on a form.

At that time, the form controller 210 according to the embodiment may cause statistical information on the whole neural network including components that form a unit to be dynamically displayed on the form. The statistical information according to the embodiment contains, for example, an output neuron size, an amount of used memory, and amounts of various types of computation.

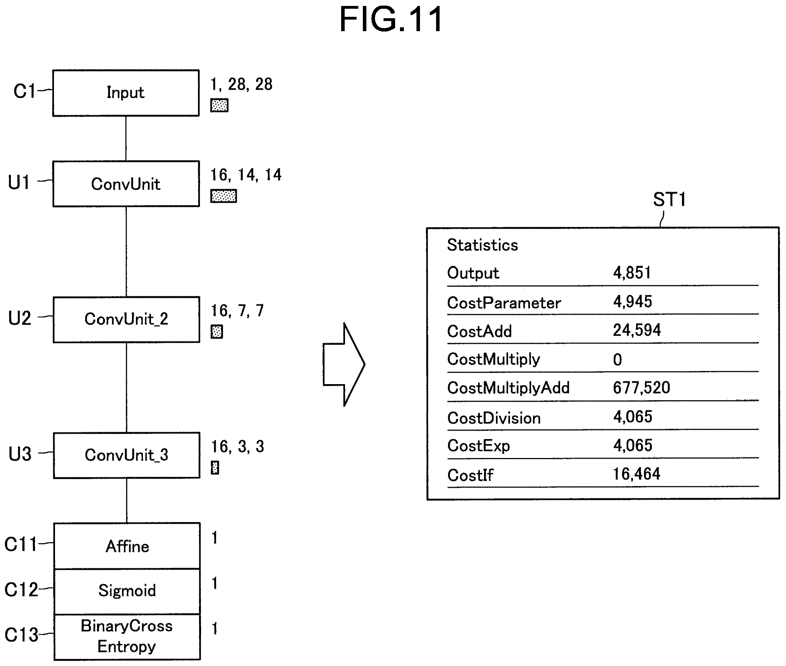

FIG. 11 is a diagram illustrating an example of displaying statistical information on a whole neural network according to the embodiment. FIG. 11 illustrates an example of displaying statistical information ST1 in the case where a neural network is formed by including components C1 and C11 to C13 and units U1 to U3.

Statistical information ST may be displayed on the palette P3 described above. "Output" in statistical information ST1 represents an output neuron size and "CostParameter" represents an amount of memory (the number of parameters) to be used.

The statistical information ST1 further contains "CostAdd", "CostMuiply", "CostMuiplyAdd", "CostDivision", "CostExp" and "CostIf".

Each of the aforementioned items represents a sum of amounts of computation of each type of operation that is processed by the neural network. Each of the items may be a value representing the number of times of adding, the number of times of multiplying, the number of times of multiplying and adding, the number of times of dividing, the number of times of calculating an index, or the number of times of conditional branch determination.

As described above, according to the form controller 210 according to the embodiment, even when a unit is used, it is possible to correctly reflect the amount of memory and the amount of computation of the internal processing of the unit in the statistical information on the whole neural network. Displaying like that described above is different from that of normal programming and can be referred to as information representation that is significantly effective in designing a neural network for which it is necessary to be strongly conscious of the output neuron size, the amount of memory, and the amount of computation.

The form controller 210 according to the embodiment may calculate statistical information on each unit in addition to the statistical information on the whole neural network and cause the statistical information on each unit.

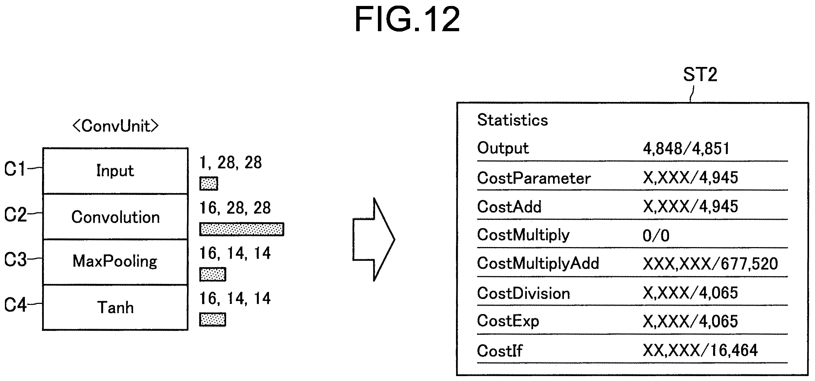

FIG. 12 is a diagram illustrating an example of displaying statistical information on each unit according to the embodiment. In the case of the example illustrated in FIG. 12, the form controller 210 calculates statistical information ST2 on "ConvUnit" formed of components C1 to C4.

At that time, the form controller 210 according to the embodiment may display statistical information on "ConvUnit" and the statistical information on a whole neural network in comparison with each other. For example, in the case of the example illustrated in FIG. 12, the form controller 210 represents the ratio of each element that is occupied by "ConvUnit" to the output neuron size, the amount of memory, and the amounts of various types of computation of the whole neural network.

As described above, according to the form controller 210 according to the embodiment, it is possible to explicitly represent an impact that is given by the process in each unit to the whole neural network and the user who have checked the statistical information is able to change the process in the unit as required. The form controller 210 may cause the above-described ratio to be displayed in percentages or to be displayed using an indicator.

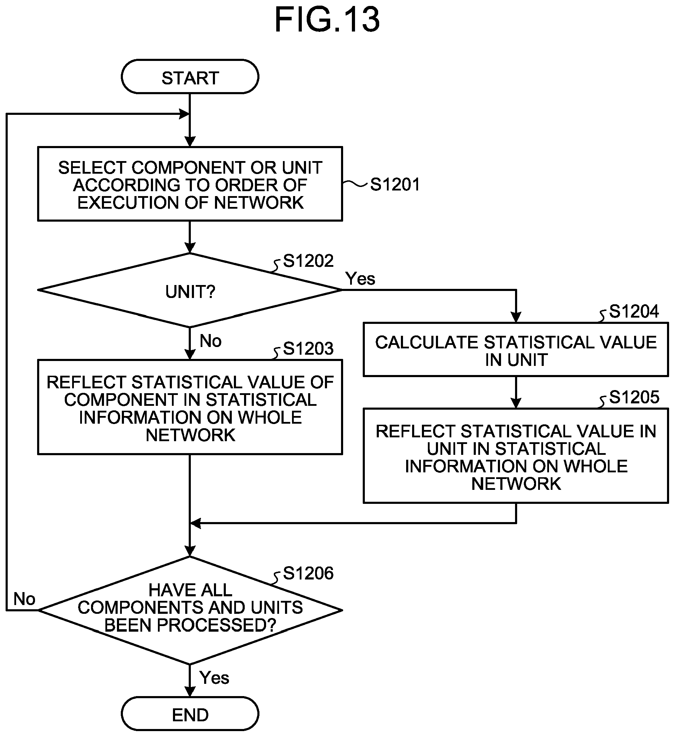

A flow of calculating statistical information according to the embodiment will be described in detail. FIG. 13 is a flowchart illustrating the flow of calculating statistical information according to the embodiment.

Referring to FIG. 13, first of all, the form controller 210 selects a component or a unit according to an order of execution of a network (S1201).

The form controller 210 determines whether the selected element is a unit (S1202).

When the selected element is a component (S1102: No), the form controller 210 reflects a statistical value of the component in statistical information on the whole network (S1203).

On the other hand, when the selected element is a unit (S1202: Yes), the form controller 210 calculates a statistical value in the unit (S1204). The form controller 210 recursively executes the process of calculating statistical information illustrated in FIG. 13.

Subsequently, the form controller 210 reflects the statistical value in the unit that is calculated at step S1204 in the statistical information on the whole neural network (S1205).

When the process at step S1203 or S1205 completes, the form controller 210 according to the embodiment determines whether all components and units have been processed (S1206).

When not all components and units have been processed (S1206: No), the form controller 210 returns to step S1201 and repeatedly executes the process at and after step S1201.

When all components and units have been processed (S1206: Yes), the form controller 210 ends the process of calculating statistical information.

### 1.6. Outputting Source Code

Next, outputting a source code by the generator 220 according to the embodiment will be described in detail. The generator 220 according to the embodiment has a function of outputting a source code of a neural network based on arrangement of components and units in a form that is provided by the form controller 210 and properties that are set.

According to the above-described function of the generator 220 according to the embodiment, for example, it is possible to, after forming an outline by visual programming, broadly respond to demands of experienced users, such as editing details using Python.

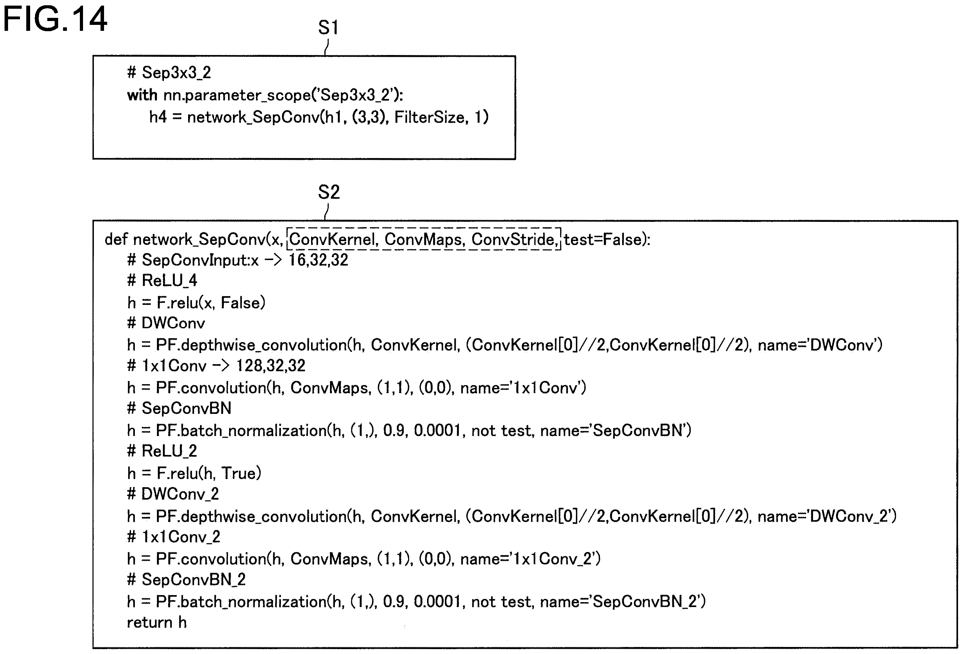

The generator 220 according to the embodiment may thus generate a source code that keeps the structure of the unit that is defined in the form and output the source code. FIG. 14 is an example of a source code that is output by the generator 220 according to the embodiment.

FIG. 14 illustrates two source codes S1 and S2 as an example of a source code that is output by the generator 220 according to the embodiment. The source code S1 is an example of a source code corresponding to a caller of the defined unit. Referring to the source code S1, it is represented that an argument that is given to a unit "SepConv" is set in the source code S1 together with a method that calls the unit "SepConv".

The source code S2 is an example of the source code of the unit "SepConv". Referring to the source code S2, it is represented that the source code S2 contains a description of multiple components that form "SepConv" and description of setting an argument, such as "ConvKarnel", "ConvMaps", "ConvStride", etc.

As described above, according to the generator 220 according to the embodiment, it is possible to generate a hierarchical source code that correctly reflects the configuration of the unit and the argument that is set in the unit and provide a code that has high readability and that is easily editable to the user.

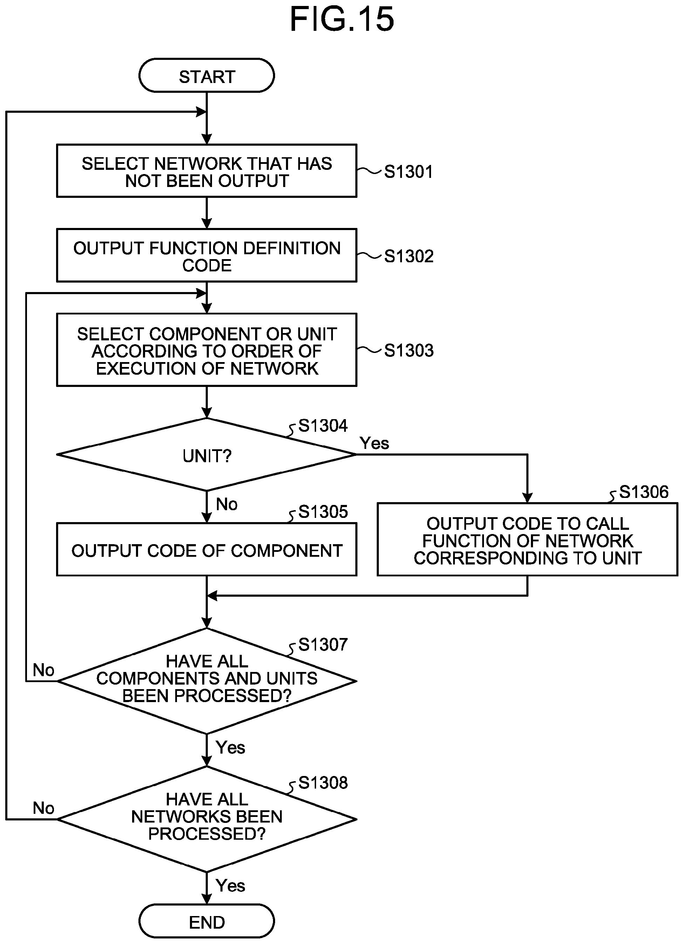

A flow of outputting a source code by the generator 220 according to the embodiment will be described in detail. FIG. 15 is a flowchart illustrating a flow of outputting a source code by the generator 220 according to the embodiment.

Referring to FIG. 15, first of all, the generator 220 selects a network whose source code has not been output (S1301).

The generator 220 outputs a code of defining a function of the network that is selected at step S1301 (S1302). At that time, when the selected network contains an argument component described above, the generator 220 adds the argument corresponding to the argument component.

Next, first of all, the generator 220 selects a component or a unit according to an order of execution of the network (S1303).

The generator 220 then determines whether the selected element is a unit (S1304).

When the selected element is a component (S1304: No), the generator 220 outputs a code of the selected component (S1305).

On the other hand, when the selected element is a unit (S1304: Yes), the generator 220 outputs a code that calls a function of a network corresponding to the selected unit (S1306). At that time, the generator 220 passes properties of the unit as an argument of the function of the network corresponding to the unit.

When the process of step S1305 or S1306 completes, the generator 220 according to the embodiment determines whether all components and units have been processed (S1307).

When not all components and units have been processed (S1307: No), the generator 220 returns to step S1303 and executes the process at and after step S1303 repeatedly.

When all components and units have been processed (S1307: Yes), the generator 220 subsequently determines whether all networks have been processed (S1308).

When no all networks have been processed (S1308: No), the generator 220 returns to step S1301 and executes the process at and after S1301 repeatedly.

On the other hand, when no all networks have been processed (S1308: Yes), the generator 220 ends the process of outputting a source code.

### 1.7. Automatically Searching for Network Structure

A function of automatically searching for a network structure according to the embodiment will be described. As described above, the generator 220 according to the embodiment has a function of generating a neural network based on components and units that are arranged by the user on a form and properties that are set.

The generator 220 according to the embodiment has a function of evaluating the generated neural network, changing the network structure of the network that has been evaluated, and generating another neural network having a different network structure. Furthermore, the generator 220 according to the embodiment evaluates another neural network that is aforementioned, updates a Pareto optimum solution, changes the network structure of the neural network of the Pareto optimum solution, and generates a still another neural network. In other words, by repeating generation of a network and update of the Pareto optimum solution, the generator 220 according to the embodiment is able to automatically search for an efficient network structure and represent the network structure to the user.

Generation of a neural network performed by the generator 220 may be realized by, for example, genetic operations including mutation and crossover. The aforementioned mutation may be modeling genetic mutation that is seen in living organisms. In other words, the generator 220 is able to generate another neural network having a different network structure by regarding each layer (that is, component) forming a network and causing mutation in a layer.

The aforementioned crossover may be modeling partial exchange of chromosomes in biological mating. In other words, the information processing method according to the disclosure makes it possible to generate another neural network that is aforementioned by partially exchanging layerings between two networks.

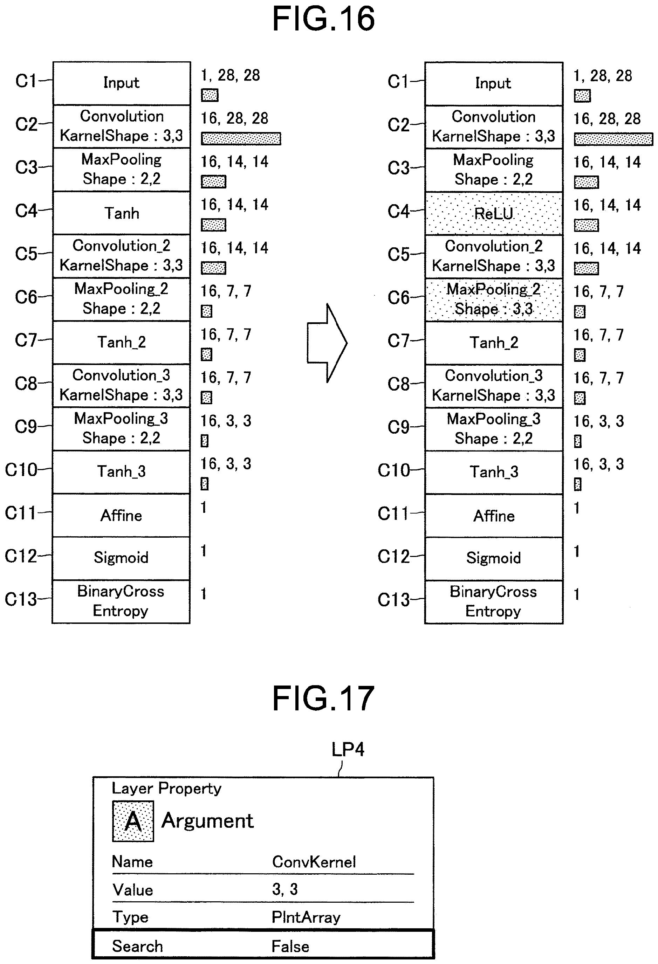

FIG. 16 is a diagram for explaining automatic structure search performed by the generator 220 according to the embodiment. A network composition before automatic structure search performed by the generator 220 is represented on the left in FIG. 16 and the network structure after automatic structure search performed by the generator 220 is represented on the right in FIG. 16, respectively.

Comparing the network compositions, it is represented that a component C4 corresponding to "Tanh" is changed to "ReLU" after automatic structure search. In the example illustrated in FIG. 16, the kernel shape of a component C6 corresponding to "MaxPooling" that is "2,2" before automatic structure search changes to "3,3" after automatic structure search.

As described above, the generator 220 according to the embodiment is able to automatically search for a more efficient network structure by changing the network structure by mutation or crossover and repeating updating a Pareto optimum solution. For details of mutation or crossover and updating a Pareto optimum solution, refer to International Publication Pamphlet No. WO 2017/154284 that was filed and disclosed by the applicants of the disclosure.

The generator 220 according to the embodiment has a characteristic in, when performing the above-described automatic structure search, determining whether to regard a unit and an argument component as one for which automatic structure search is to be performed based on structure search permissibility that is set in the unit and the argument component.

FIG. 17 is a diagram for describing structure search permissibility setting in an argument component according to the embodiment. FIG. 17 illustrates an example of property information LP4 on an argument component according to the embodiment.

The property information LP4 contains "Search" as an item. "Search" herein may be an item for setting whether automatic structure search performed by the generator 220 is permitted, that is, structure search permissibility. The generator 220 according to the embodiment is able to determine whether to change the value of argument based on the aforementioned structure search permissibility.

In the case of the example illustrated in FIG. 17, because "False" is set in the item "Search", the generator 220 regards the argument "Convkernel" as one for which automatic structure search is not to be performed and maintains the value of argument without changing the value of argument.

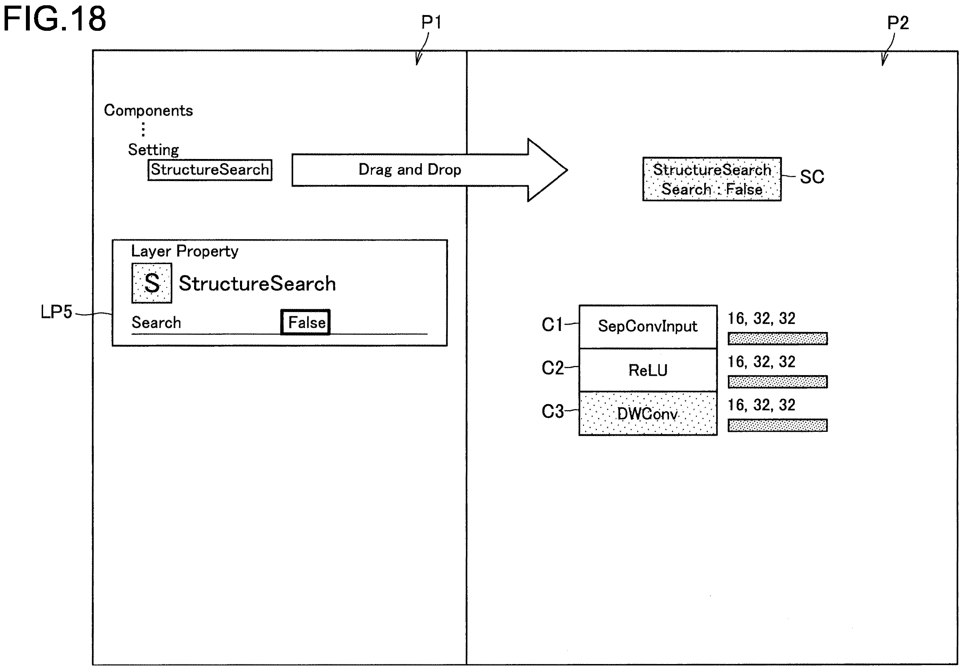

FIG. 18 is a diagram for describing structure search permissibility setting in a unit according to the embodiment. FIG. 18 illustrates an example of a unit formed of components C1 to C3 and a structure search permissibility setting component SC that is set in the unit.

The structure search permissibility of a unit according to the embodiment can be set using a structure search permissibility setting component SC like that represented in FIG. 18. At that time, the user is able to set structure search permissibility of a unit by dragging the structure search permissibility setting component SC that is displayed in a list on the palette P1 and dropping the structure search permissibility setting component SC in the palette P2 and selecting the value of the item "Search" in property information LP5.

The generator 220 according to the embodiment is able to determine whether to change a network structure of a unit based on the above-described structure search permissibility. In the case of the example illustrated in FIG. 18, "False" is set in the item "Search" and thus the generator 220 regards the unit as one for which automatic structure search is not to be performed and maintains the network structure without changing the structure.

As described above, according to the information processing method according to the embodiment, the user is able to make a setting such that automatic structure search is to be performed for only a freely-selected unit and a freely-selected argument and obtain an optimized network that reflects the intention of the user. The search structure permissibility setting according to the embodiment may be the "True" condition by default. In this case, by making the above-described setting in a unit and an argument for which the automatic structure search is not to be performed, the user is able to maintain the unit and the argument in the original setting.

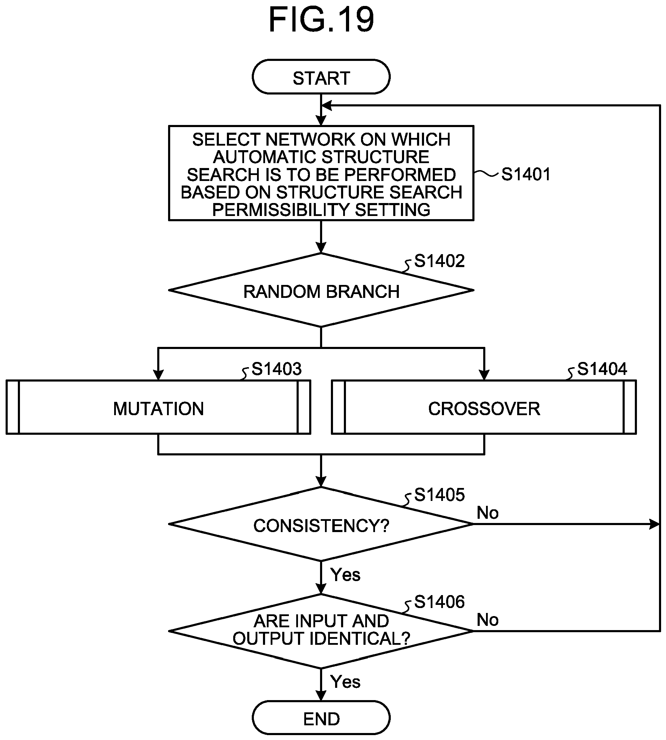

Subsequently, a flow of automatic structure search performed by the generator 220 according to the embodiment will be described in detail. FIG. 19 is a flowchart illustrating the flow of automatic structure search performed by the generator 220 according to the embodiment.

Referring to FIG. 19, first of all, the generator 220 selects a network on which automatic structure search is to be performed based on the above-described automatic structure search permissibility setting (S1401). At that time, the generator 220 may randomly select a network in which the automatic structure search permissibility setting is valid from among caller networks and units.

Next, the generator 220 randomly determines a method of automatic structure search (S1402). The generator 220 may perform automatic structure search by, for example, causing mutation in the network that is selected at S1401 (S1403).

The generator 220 may perform automatic structure search by, for example, causing crossover in the network that is selected at S1401 (S1404).

Subsequently, the generator 220 determines consistency of the neural network on which automatic structure search is performed at step S1403 or step S1404 (S1405).

When it is determined that a generated neural network does not have consistency (S1405: No), the generator 220 discards the generated neural network and returns to step S1401.

On the other hand, when consistency is seen in a generated neural network (S1405: Yes), the generator 220 subsequently determines whether the input and output are identical between the generated neural network and the original neural network (S1406).

When the input and output are different between the neural networks (S1406: No), because it is difficult to process an assumed recognition problem, the generator 220 discards the generated neural network and returns to step S1401.

On the other hand, when the input and output are identical between the generated neural network and the original neural network (S1406: Yes), the generator 220 ends the process of automatic structure search normally.

### 2. Example of Hardware Configuration

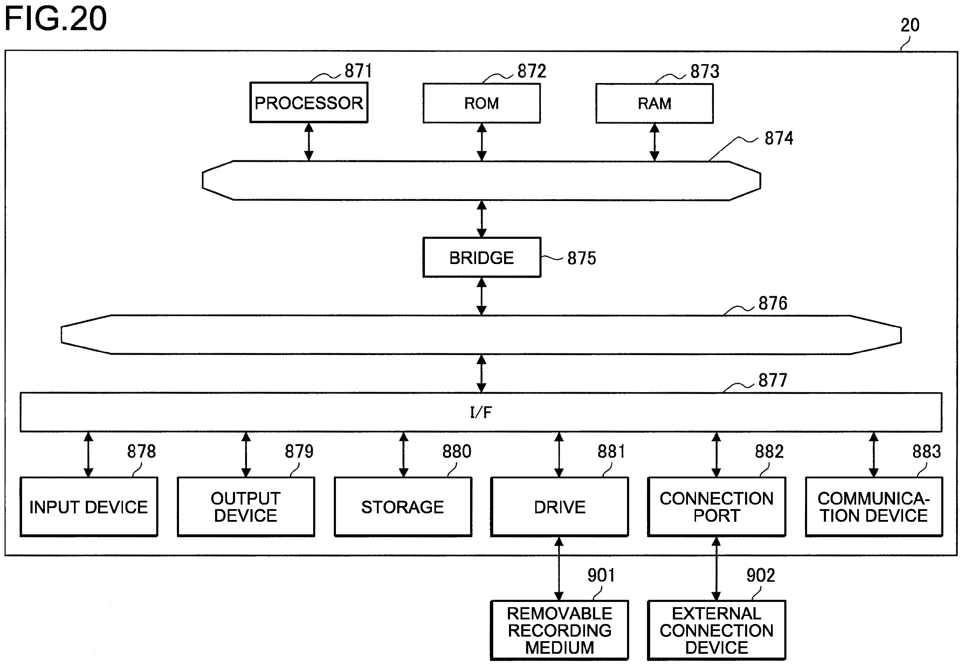

An example of a hardware configuration of the information processing server 20 according to the embodiment of the disclosure will be described. FIG. 20 is a block diagram illustrating the example of the hardware configuration of the information processing server 20 according to the embodiment of the disclosure. Referring to FIG. 20, the information processing server 20 includes, for example, a processor 871, a ROM 872, a RAM 873, a host bus 874, a bridge 875, an external bus 876, an interface 877, an input device 878, an output device 879, a storage 880, a drive 881, a connection port 882, and a communication device 883. The hardware configuration illustrated herein is an example and the components may be partly omitted. Components other than the components illustrated herein may be further included.

### Processor 871

The processor 871, for example, functions as an arithmetic processor or a control device and controls all or part of operations of each component based on various programs that are recorded in the ROM 872, the RAM 873, the storage 880 or a removable recording medium 901.

### ROM 872, RAM 873

The ROM 872 is a unit that stores a program to be loaded in the processor 871 and data used for computation, etc. In the RAM 873, for example, a program to be loaded in the processor 871 and various parameters that vary as appropriate when the program is executed, etc., are temporarily or permanently stored.

### Host Bus 874, Bridge 75, External Bus 876 and Interface 877

The processor 871, the ROM 872 and the RAM 873 are, for example, connected to one another via the host bus 874 enabling high-rate data transmission. On the other hand, the host bus 874 is, for example, connected to the external bus 876 in which the data transmission rate is relatively low via the bridge 875. The external bus 876 is connected to various components via the interface 877.

### Input Device 878

For example, a mouse, a keyboard, a touch panel, a button, a switch, a lever, etc., are used for the input device 878. Furthermore, a remote controller (hereinafter, remote) capable of transmitting a control signal using infrared rays or other radio waves may be used as the input device 878. The input device 878 also includes an audio input device, such as a microphone.

### Output Device 879

The output device 879 is, for example, a device capable of visually or auditorily notifying a user of acquired information, such as a display device like a CRT (Cathode Ray Tube), a LCD or an organic EL display, an audio output device like a speaker or headphones, a printer, a mobile phone, or a facsimile machine. The output device 879 according to the disclosure includes various vibration devices capable of outputting tactile stimulation.

### Storage 880

The storage 880 is a device for storing various types of data. For example, a magnetic storage device, such as a hard disk drive (HDD), a semiconductor storage device, an optical storage device, an magneto-optical storage device, or the like, may be used as the storage 880.

### Drive 881

The drive 881 is, for example, a device that reads information that is recorded in the removable recording medium 901, such as a magnetic disk, an optical disk, a magneto-optical disk or a semiconductor memory, or writes information in the removable recording medium 901.

### Removable Recording Medium 901

The removable recording medium 901 is, for example, a DVD medium, a Blu-ray (trademark) medium, a HD DVD medium, or various types of semiconductor storage media. The removable recording medium 901 may be, for example, an IC card on which a non-contact IC chip is mounted, or an electric device.

### Connection Port 882

The connection port 882 is, for example, a port for connecting the external connection device 902, such as a USB (Universal Serial Bus) port, an IEEE1394 port, a SCSI (Small Computer System Interface), a RS-232C port or an optical audio terminal.

### External Connection Device 902

The external connection device 902 is, for example, a printer, a portable music player, a digital camera, a digital video camera or an IC recorder.

### Communication Device 883

The communication device 883 is a communication device for connecting to a network and is, for example, a communication card for a wired or wireless LAN, Bluetooth (trademark) or WUSB (Wireless USB), a router for optical communication, a router for ADSL (Asymmetric Digital Subscriber Line), or a modem for various types of communication.

### 3. Summary

As described above, the information processing method according to the embodiment of the disclosure has a characteristic in including, by a processor, providing a form for creating a program to build a neural network based on arrangement of a component corresponding to a layer and properties that are set in the component and representing statistical information on the neural network. Providing the form has a characteristic in further including providing a function of, in the form, defining a unit formed of multiple components and providing the defined unit such that the defined unit can be arranged like a component. The configuration makes it possible to further increase efficiency in developing a neural network.

The preferable embodiments of the disclosure have been described in detail with reference to the accompanying drawings; however, the technical scope of the disclosure is not limited to the examples. It is obvious that those with general knowledge in the technical field of the disclosure can reach various modification examples or correction examples within the scope of technical idea described in the claims and it is understood that they naturally belong to the technical scope of the disclosure.

The effects disclosed herein are explanatory and exemplary only and thus are not definitive. In other words, the technique according to the disclosure can achieve, together with the above-described effect or instead of the above-described effect, other effects obvious to those skilled in the art from the description herein.

It is also possible to create a program for causing hardware, such as a CPU, a ROM, or a RAM, that is incorporated in a computer to implement a function equivalent to that of the configuration of the information processing server 20 and a computer-readable recording medium in which the program is recorded can be provided.

Each step of the processes performed by the information processing server 20 herein need not necessarily be processed chronologically in the order illustrated in the flowcharts. For example, each step according to the processes performed by the information processing server 20 may be processed in an order different from that illustrated in the flowcharts or may be processed parallelly.

The following configuration also belongs to the technical scope of the disclosure.
(1) An information processing method comprising:
   by a processor, providing a form for creating a program to build a neural network based on arrangement of a component corresponding to a layer and properties that are set in the component; and
   representing statistical information on the neural network,
   wherein the providing a form further includes providing a function of, on the form, defining a unit formed of the multiple components, and
   providing the defined unit such that the defined unit can be arranged like the component.
(2) The information processing method according to (1), wherein the providing a form further includes providing the multiple units such that the units are reusable.
(3) The information processing method according to (1) or
   (2), wherein the providing a form further includes providing a function of defining an argument that is commonly usable among the components that form the unit; and
   performing control such that the defined argument can be set as part of properties of the unit.
(4) The information processing method according to (3), wherein the providing the function of defining a parameter further includes controlling the parameter based on an argument component corresponding to the parameter that is arranged on the form and properties that are set in the argument component.
(5) The information processing method according to any one of (1) to (4), wherein the providing a form further includes displaying, on the form, the unit using a predetermined visual representation not depending on the type and number of the components that form the unit.
(6) The information processing method according to (5), wherein the providing a form further includes displaying a parameter that is changed by processing the components that form the unit in association with the visual representation corresponding to the unit.
(7) The information processing method according to any one of (1) to (6), wherein the representing statistical information further includes representing the statistical information on the whole neural network including the components that form the unit, and
   the statistical information includes at least one of an output neuron size, an amount of memory used, and an amount of computation.
(8) The information processing method according to (7), wherein the representing statistical information further includes representing the statistical information on each unit.
(9) The information processing method according to (7) or (8), wherein the representing statistical information further includes representing the statistical information on the whole neural network and the statistical information on the unit in comparison with each other.
(10) The information processing method according to any one of (1) to (9), further comprising receiving an operation performed by the user to select an element contained in the statistical information and representing a value of the selected element for each component and each unit by comparison.
(11) The information processing method according to (10), wherein the value of the element for each component or each unit and an indicator representing a magnitude of the value of the element in association with the component or the unit that is arranged on the form.
(12) The information processing method according to any one of (1) to (11), wherein the providing a form further includes permitting that, in the defining a unit, the unit is formed by including at least one unit.
(13) The information processing method according to any one of (1) to (12), further comprising outputting a source code of the neural network based on the arrangement of the component and the unit and the properties that are set.
(14) The information processing method according to (13), wherein the outputting a source code further includes generating the source code that maintains a configuration of the unit.
(15) The information processing method according to any one of (1) to (14), further comprising:
   generating another neural network having a different network structure from a neural network that has been evaluated;
   acquiring a result of evaluating the generated neural network; and
   updating a Pareto optimum solution of the neural network having been evaluated based on a result of evaluating the generated neural network,
   wherein the generating further includes generating the another neural network having a different network structure from the neural network of the Pareto optimum solution.
(16) The information processing method according to (15), further comprising determining whether to change the network structure of the unit based on structure search permissibility that is set in the unit.
(17) The information processing method according to (15) or (16), wherein the generating further includes determining whether to change a value of an argument that is used in the unit based on structure search permissibility that is set in the argument.
(18) An information processing apparatus comprising:
   a form controller configured to provide a form for creating a program to build a neural network based on arrangement of a component corresponding to a layer and properties that are set in the component and represent statistical information on the neural network on the form,
   wherein the form controller is configured to provide a function of, on the form, defining a unit formed of the multiple components and provide the defined unit such that the defined unit can be arranged like the component.
(19) A program for causing a computer to function as an information processing apparatus including:
   a form controller configured to provide a form for creating a program to build a neural network based on arrangement of a component corresponding to a layer and properties that are set in the component and represent statistical information on the neural network on the form,
   wherein the form controller is configured to provide a function of, on the form, defining a unit formed of the multiple components and provide the defined unit such that the defined unit can be arranged like the component.

### Reference Signs List

- 10: INFORMATION PROCESSING TERMINAL
- 110: DISPLAY UNIT
- 120: INPUT UNIT
- 130: CONTROLLER
- 140: SERVER COMMUNICATION UNIT
- 20: INFORMATION PROCESSING SERVER
- 210: FORM CONTROLLER
- 220: GENERATOR
- 230: TERMINAL COMMUNICATION UNIT

## Claims

1. An information processing method comprising:
by a processor, providing a form for creating a program to build a neural network based on arrangement of a component corresponding to a layer and properties that are set in the component; and
representing statistical information on the neural network,
wherein the providing a form further includes providing a function of, on the form, defining a unit formed of the multiple components, and
providing the defined unit such that the defined unit can be arranged like the component.

2. The information processing method according to claim 1, wherein the providing a form further includes providing the multiple units such that the units are reusable.

3. The information processing method according to claim 1, wherein the providing a form further includes providing a function of defining an argument that is commonly usable among the components that form the unit; and
performing control such that the defined argument can be set as part of properties of the unit.

4. The information processing method according to claim 3, wherein the providing the function of defining a parameter further includes controlling the parameter based on an argument component corresponding to the parameter that is arranged on the form and properties that are set in the argument component.

5. The information processing method according to claim 1, wherein the providing a form further includes displaying, on the form, the unit using a predetermined visual representation not depending on the type and number of the components that form the unit.

6. The information processing method according to claim 5, wherein the providing a form further includes displaying a parameter that is changed by processing the components that form the unit in association with the visual representation corresponding to the unit.

7. The information processing method according to claim 1, wherein the representing statistical information further includes representing the statistical information on the whole neural network including the components that form the unit, and
the statistical information includes at least one of an output neuron size, an amount of memory used, and an amount of computation.

8. The information processing method according to claim 7, wherein the representing statistical information further includes representing the statistical information on each unit.

9. The information processing method according to claim 7, wherein the representing statistical information further includes representing the statistical information on the whole neural network and the statistical information on the unit in comparison with each other.

10. The information processing method according to claim 1, further comprising receiving an operation performed by the user to select an element contained in the statistical information and representing a value of the selected element for each component and each unit by comparison.

11. The information processing method according to claim 10, wherein the value of the element for each component or each unit and an indicator representing a magnitude of the value of the element in association with the component or the unit that is arranged on the form.

12. The information processing method according to claim 1, wherein the providing a form further includes permitting that, in the defining a unit, the unit is formed by including at least one unit.

13. The information processing method according to claim 1, further comprising outputting a source code of the neural network based on the arrangement of the component and the unit and the properties that are set.

14. The information processing method according to claim 13, wherein the outputting a source code further includes generating the source code that maintains a configuration of the unit.

15. The information processing method according to claim 1, further comprising:
generating another neural network having a different network structure from a neural network that has been evaluated;
acquiring a result of evaluating the generated neural network; and
updating a Pareto optimum solution of the neural network having been evaluated based on a result of evaluating the generated neural network,
wherein the generating further includes generating the another neural network having a different network structure from the neural network of the Pareto optimum solution.

16. The information processing method according to claim 15, further comprising determining whether to change the network structure of the unit based on structure search permissibility that is set in the unit.

17. The information processing method according to claim 15, wherein the generating further includes determining whether to change a value of an argument that is used in the unit based on structure search permissibility that is set in the argument.

18. An information processing apparatus comprising:
a form controller configured to provide a form for creating a program to build a neural network based on arrangement of a component corresponding to a layer and properties that are set in the component and represent statistical information on the neural network on the form,
wherein the form controller is configured to provide a function of, on the form, defining a unit formed of the multiple components and provide the defined unit such that the defined unit can be arranged like the component.

19. A program for causing a computer to function as an information processing apparatus including:
a form controller configured to provide a form for creating a program to build a neural network based on arrangement of a component corresponding to a layer and properties that are set in the component and represent statistical information on the neural network on the form,
wherein the form controller is configured to provide a function of, on the form, defining a unit formed of the multiple components and provide the defined unit such that the defined unit can be arranged like the component.
